Europäisches Patentamt

European Patent Office

Office européen des brevets

(19)

(11) Veröffentlichungsnummer: **0 224 708 B1**

(12) **EUROPÄISCHE PATENTSCHRIFT**

(45) Veröffentlichungstag der Patentschrift: 07.08.91

(51) Int. Cl.⁵: **A01B** 33/10, A01B 33/14, A01B 23/02

(21) Anmeldenummer: 86114825.2

(22) Anmeldetag: 24.10.86

(54) Zinken für eine Bodenbearbeitungsmaschine.

(30) Priorität: 02.11.85 DE 3538895

(43) Veröffentlichungstag der Anmeldung:
10.06.87 Patentblatt 87/24

(45) Bekanntmachung des Hinweises auf die
Patenterteilung:
07.08.91 Patentblatt 91/32

(84) Benannte Vertragsstaaten:
**DE FR GB IT NL**

(56) Entgegenhaltungen:
**AU-B- 522 527**
**DE-A- 2 835 634**
**DE-A- 2 943 040**
**DE-U- 8 213 540**
**US-A- 4 018 289**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Gattermann, Bernd
Eichenwall 3
W-2872 Hude i.O.(DE)**
Erfinder: **Gieseke, Reinhard
Eichenwall 4
W-2872 Hude i.O.(DE)**

## Beschreibung

Die Erfindung betrifft einen Zinken für eine Bodenbearbeitungsmaschine gemäß des Oberbegriffes des Patentanspruches 1.

Ein derartiger Zinken ist bereits durch das deutsche Gebrauchsmuster 82 13 540 bekannt geworden. Dieser Zinken weist auf seiner der Drehrichtung zugewandten Seite eine messerartige Schneide auf. Von Vorteil ist bei diesem Zinken, daß er elastisch ist. Aufgrund seiner Ausbildung als Blattfeder kann der Zinken um einen begrenzten Betrag zur Seite und entgegen seiner Drehrichtung ausweichen, wenn der Zinken auf einen Stein auftrifft. Hierdurch werden Beschädigungen an dem Zinken und der Bodenbearbeitungsmaschine vermieden.

Von Nachteil ist jedoch bei diesen Zinken zunächst, daß sie einerseits sehr schnell verschleißen und andererseits vor allem beim Umbruch von Stoppelfeldern sich an den Zinken Stroh ansetzt. Die Zinken sammeln also Stroh, so daß nur noch eine sehr schlechte Bodenbearbeitung stattfindet. Weiterhin muß jeweils der überwiegende Teil des Zinkens weggeworfen werden, wenn der schmale untere Teil des Zinkens verschlissen ist. Da der Verschleiß aufgrund des wenigen zur Verfügung stehenden Materiales sehr schnell erfolgt, ist der bekannte Zinken nicht zufriedenstellend ausgebildet.

Der Erfindung liegt nun die Aufgabe zugrunde, für den bekannten Zinken eine einfache Möglichkeit für den Ersatz verschlissener Bodenbearbeitungszinken zu schaffen.

Diese Aufgabe wird dadurch gelöst, daß nach Abnutzung bzw. Verschleiß des Bodenbearbeitungsteiles an dem Restzinken ein neues Bodenbearbeitungsteil anschweißbar ist, daß der Zinken unterhalb seiner Befestigungsstelle und oberhalb des Bodenbearbeitungsteiles Markierungen aufweist, die die Anschweißstelle des neuen Bodenbearbeitungsteiles bestimmen. Infolge dieser Maßnahmen wird auf einfachste und kostengünstige Weise nach dem Verschleiß bzw. der Abnutzung des Bodenbearbeitungsteiles ein praktisch neuwertiger Zinken geschaffen. Aufgrund der Markierungen, die die Anschweißstelle des neuen Bodenbearbeitungsteiles an dem alten Befestigungsteil des Zinkens bestimmen, kann der Landwirt selbst ein neues Bodenbearbeitungsteil an dem Restzinken anschweißen. Der Landwirt muß dann lediglich mit einem Winkelschleifer oder einem anderen Trenngerät an den Markierungen entlang eine saubere Anschweißstelle schaffen. Da die Schnittstelle vorgezeichnet ist, kann auch das neue Bodenbearbeitungsteil exakt in der gewünschten Weise und in der gewünschten Stellung an dem Restzinken angeschweißt werden. Damit man eine möglichst lange Schweißnaht erhält, ist erfindungsgemäß vorgesehen, daß die Markierungen schräg zur Längsachse des Zinkens verlaufen.

Selbstverständlich läßt sich diese Anschweißmöglichkeit auch bei den eingangs als Stand der Technik beschrieben Messerzinken anwenden.

Weitere Merkmale der Erfindung sind den übrigen Unteransprüchen, der Beispielsbeschreibung und den Zeichnungen zu entnehmen. Hierbei zeigen

Fig. 1      eine erfindungsgemäß ausgebildete Bodenbearbeitungsmaschine mit hinter der Bodenbearbeitungsmaschine angeordneter Nachlaufwalze in der Vorderansicht,

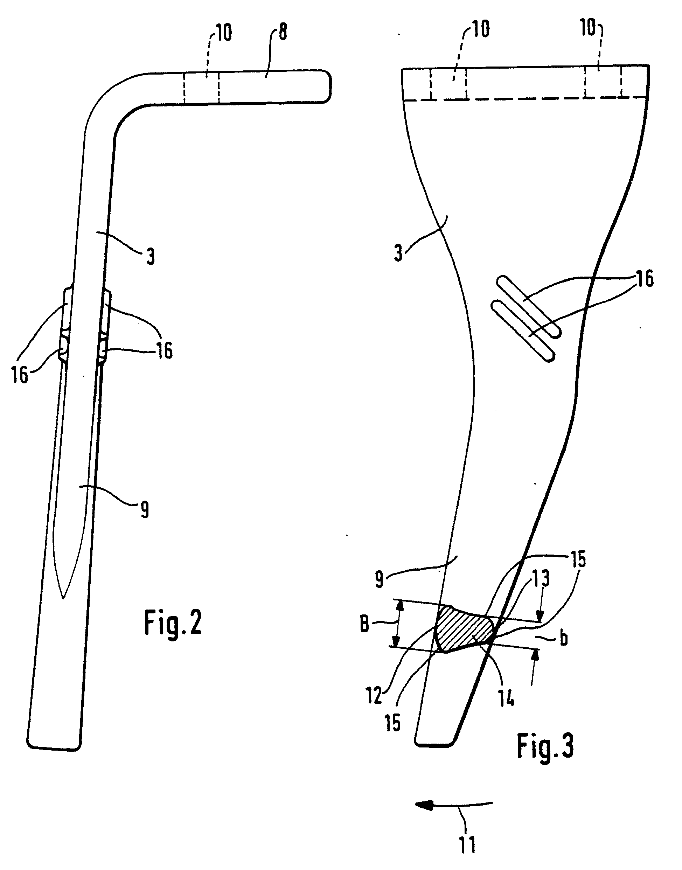

Fig. 2      einen erfindungsgemäß ausgebildeten Zinken in der Rückansicht,

Fig. 3      den Zinken gemäß Fig. 2 in der Seitenansicht,

Fig. 4      das Anschweißen eines neuen Bodenbearbeitungsteiles an dem Restzinken in der Seitenansicht,

Fig. 5      das neue Bodenbearbeitungsteil in der Seitenansicht,

Fig. 6      das Bodenbearbeitungsteil gemäß Fig. 5 in der Vorderansicht,

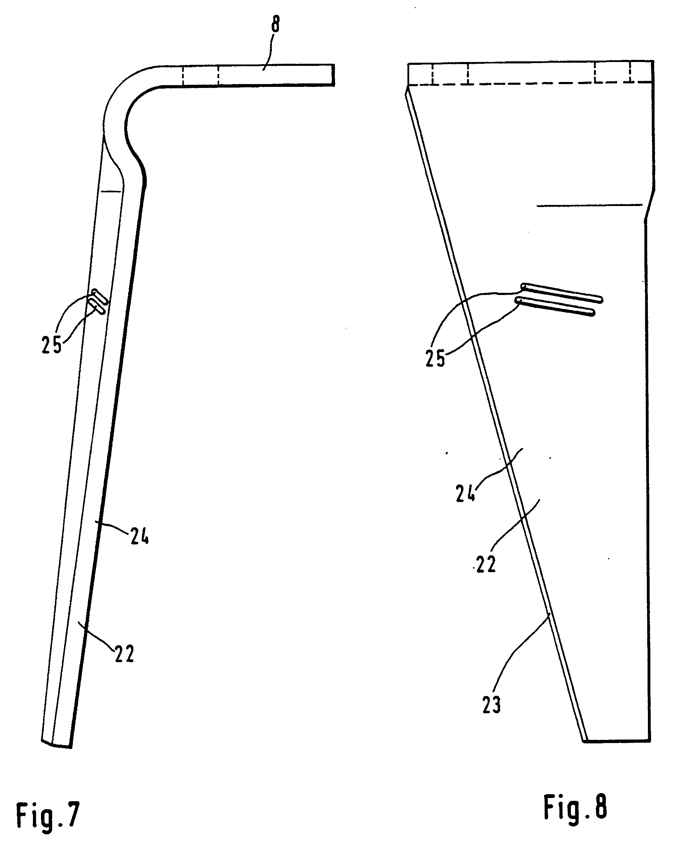

Fig. 7      einen Messerzinken in der Ansicht von hinten,

Fig. 8      den Messerzinken gemäß Fig. 7 in der Seitenansicht,

Fig. 9      das Anschweißen eines neuen Messerteiles an dem Restzinken in der Seitenansicht,

Fig. 10     das neue Messerteil in der Seitenansicht und

Fig. 11     das neue Messerteil in der Vorderansicht.

Die Bodenbearbeitungsmaschine weist das Gestell 1 auf, in dem in einer quer zur Fahrtrichtung verlaufenden Reihe nebeneinander die Werkzeugkreisel 2 angeordnet sind. Die Werkzeugkreisel 2 werden von der Zapfwelle des die Bodenbearbeitungsmaschine ziehenden, jedoch nicht dargestellten Schleppers angetrieben, wobei die jeweils einander benachbarten Werkzeugkreisel 2 im entgegengesetzten Drehsinn um aufrechte Achsen rotieren.

Die Werkzeugkreisel 2 sind tellerförmig aufgebildet. An diesen Werkzeugkreiseln 2 sind die nach unten ragenden Zinken 3 befestigt. Seitlich neben den jeweils äußeren Werkzeugkreiseln 2 ist das Seitenblech 4 angeordnet, welches die Verlagerung der Erde nach außen begrenzt. Hinter der Bodenbearbeitungsmaschine ist die Nachlaufwalze 5 mit ihren auf dem Umfang angeordneten Zacken 6 angeordnet.

Die Werkzeugkreisel 2 weisen radial nach außen weisende Aufnahmeöffnungen 7 für die jeweilige Befestigungsteile 8 der Zinken 3 auf. Die Zinken 3 weisen jeweils das Bodenbearbeitungsteil 9, welches den Boden bearbeitet und ein etwa rechtwinklig zu dem Bearbeitungsteil 9 abgewinkeltes Befestigungsteil 8 auf. Dieses Befestigungsteil 8 weist die beiden Bohrungen 10 auf. Diese Bohrungen 10 weisen eine korrespondierende Lage zu Bohrungen in den Werkzeugkreiseln 2 auf, so daß die Zinken 3 durch die sich in den Werkzeugkreiseln 2 und den Zinken befindenen Bohrungen gesteckten Bolzen gesichert werden.

Der Zinken 3 weist auf der seiner Drehrichtung 11 zugewandten Seite 12 eine Breite B auf, die größer ist als die Breite b auf der der Drehrichtung 11 abgewandten Seite 13 des Bodenbearbeitungsteiles 9 des Zinkens 3. Weiterhin ist der Bearbeitungsteil 9 auf der seiner Drehrichtung 11 zugewandten Seite 12 abgerundet. Der Zinken 9 weist im Bereich seines Bodenbearbeitungsteiles 9 einen etwa dreieckförmigen Querschnitt 14 mit den abgerundeten Ecken 15 auf. Durch die breite Fläche des Bodenbearbeitungsteiles 9 des Zinkens 3 auf seiner der Drehrichtung 11 zugewandten Seite 12 wird eine sehr gute Krümelwirkung des Bodens durch Schlagzerkleinerung erreicht, wobei zusätzlich durch den auf Griff stehenden Bodenbearbeitungsteil 9 des Zinkens 3 ein guter Mischeffekt des Bodens erreicht wird. Dieses wird vor allem durch die gute Schaufelwirkung des breiten Bodenbearbeitungsteiles 9 erzielt. Beim Einsatz der Bodenbearbeitungsmaschine, die mit den Zinken 3 ausgerüstet ist, auf Stoppelfeldern, schiebt sich das Stroh, welches von den Zinken 3 mitgenommen wird an der breiten Vorderseite des Zinkens nach oben, so daß es dann oberhalb der Bodenoberfläche von dem jeweiligen Zinken abfällt. Hierdurch wird also ein Selbstreinigungseffekt des Zinkens auf strohreichen Böden erreicht. Es wird sich also niemals soviel Stroh an den Zinken 3 ansetzen, daß es zu Verstopfungen beim Stoppelfeldumbruch kommt.

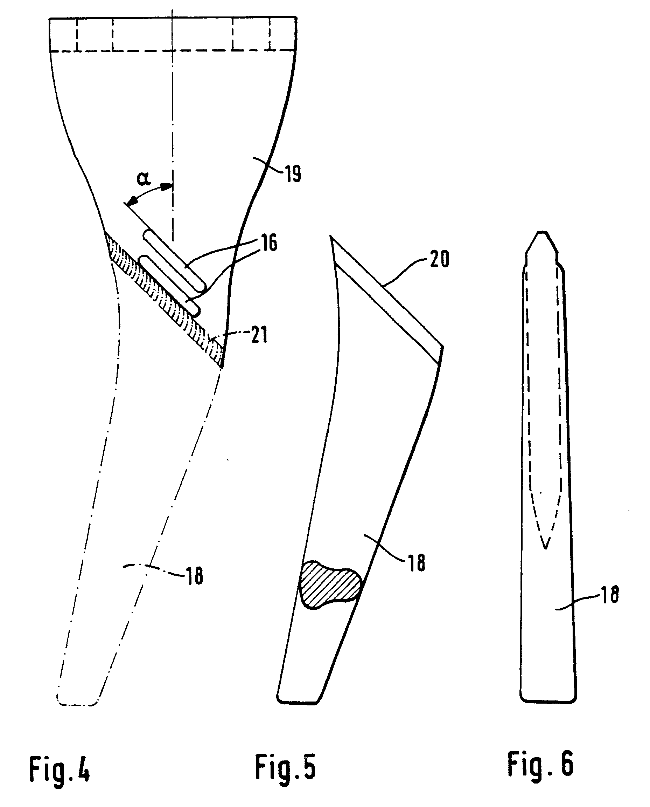

Der Zinken 3 weist oberhalb seines Bodenbearbeitungsteiles 9 die als Erhebungen 16 ausgebildeten Markierungen auf. Diese Markierungen 16 bestimmen die Anschweißstelle 17 eines neuen Bodenbearbeitungsteiles 18, wie es in den Fig. 5 und 6 dargestellt ist. Wenn das Bodenbearbeitungsteil 9 des Zinkens 3 etwa bis zu den Markierungen 16 abgenutzt ist, wird an dem Restzinken 19, wie in Fig. 5 dargestellt ist, der im wesentlichen aus dem Befestigungsteil 8 und dem oberen abgewinkelten Teil des Zinkens 3 noch besteht, vorzugsweise mit einem Winkelschleifer oder einem anderen Trenngerät entlang der Linie, die von den Erhebungen 16 vorgezeichnet ist, der restliche obere Teil des Bodenbearbeitungsteiles 9 abgeschnitten, so daß man eine gerade Anschweißlinie erhält, die der Schräge 20 an dem neuen Bearbeitungsteil 18 entspricht, damit der neue Bodenbearbeitungsteil 18 die gleiche Stellung wie der ursprüngliche Bearbeitungsteil 9 an dem Zinken 3 einnimmt. Des weiteren weist das neue Bodenbearbeitungsteil 18 an seiner schrägen Oberseite 20 schräge Kanten auf, so daß man eine ausreichend dicke Schweißnaht 21 erhält. Nach dem Anschweißen des neuen Bearbeitungsteiles 18, der in Fig. 4 mit strichpunktierten Linien angedeutet ist, erhält man so wieder einen parktisch neuen Zinken. Neue Bodenbearbeitungsteile 18 können mehrfach an einem Restzinken 19 angeschweißt werden.

Um eine möglichst lange Schweißnaht zu bekommen, damit die Schweißnaht eine ausreichend hohe Festigkeit besitzt, verlaufen die Markierungen 19, die den Verlauf der Schweißnaht bestimmen, in einem Winkel von kleiner als 60° zur Senkrechten, bezogen auf die Montage des Zinkens 3 an dem Werkzeugkreisel 2.

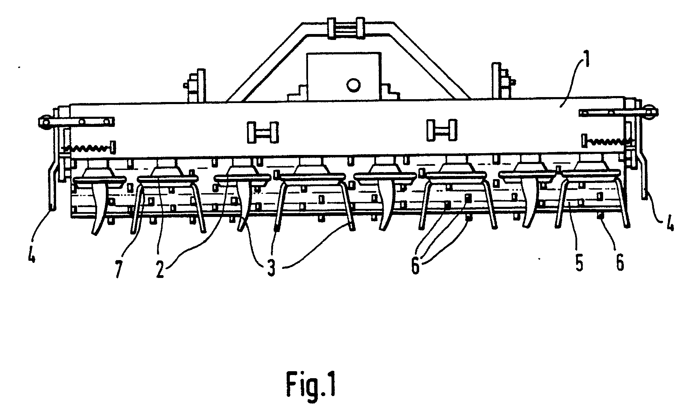

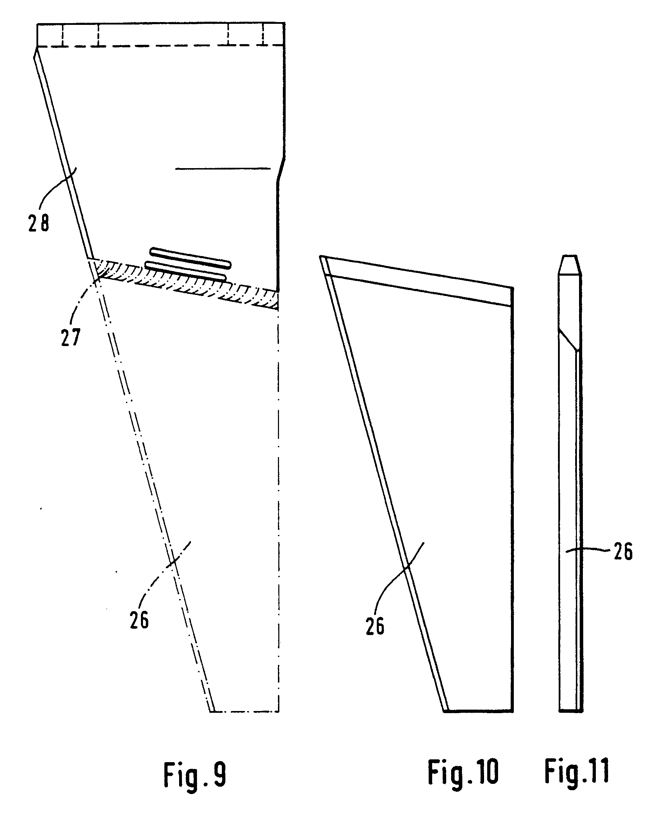

Der Messerzinken 22 ist ebenfalls zur Montage an den Werkzeugkreiseln 2 der in Fig. 1 dargestellten Bodenbearbeitungsmaschine vorgesehen. Diese Messerzinken 22 weisen eine schleppend verlaufende Schneidkante 23 auf. Die Schneidkante 23 befindet sich an dem Bodenbearbeitungsteil 24 des Messerzinkens 22. Weiterhin weist der Zinken 22 ein etwa rechtwinklig zum Bodenbearbeitungsteil 24 abgewinkeltes Befestigungsteil 8 auf. Der Zinken 22 weist oberhalb seines Bodenbearbeitungsteiles die als Einprägungen 25 ausgebildeten Markierungen auf, die die Anschweißstelle eines in den Fig. 10 und 11 dargestellten neuen Bodenbearbeitungsteiles 26 markieren. Wenn das Bodenbearbeitungsteil 24 des Zinkens 22 bis zu den Markierungen 25 verschlissen ist, wird mit einem Winkelschleifer oder einem anderen Trenngerät entlang den Markierungen 25 eine schräg zur Längsachse des Zinkens verlaufende gerade Schnittfläche geschaffen, so daß an dieser Schnittfläche mittels der Schweißnaht 27 der neue Bodenbearbeitungsteil 26, der in Fig. 9 strichpunktiert dargestellt ist, angeschweißt werden kann. Somit kann also auf einfachste Weise unter geringstmöglichem Materialeinsatz der Bodenbearbeitungszinken 22 immer wieder in einfacher und kostengünstiger Weise vom Landwirt selbst erneuert werden.

Es ist nicht erforderlich, daß das überwiegende Material des Zinkens 3 oder 22, welches von dem Restzinken gebildet wird nach Verschleiß des Bodenbearbeitungsteiles verschrottet werden muß.

## Patentansprüche

1. Zinken für eine Bodenbearbeitungsmaschine mit mehreren in einer quer zur Fahrtrichtung verlaufenden Reihe nebeneinander angeordneten Werkzeugkreiseln, an denen die Zinken angeordnet sind, wobei die Zinken jeweils ein etwa rechtwinklig zum Bodenbearbeitungsteil abgewinkeltes Befestigungsteil aufweisen, dadurch gekennzeichnet, daß nach Abnutzung bzw. Verschleiß des Bodenbearbeitungsteiles (9,24) an dem Restzinken (9,28) ein neues Bodenbearbeitungsteil (18,26) anschweißbar ist, daß der Zinken (3,22) unterhalb seiner Befestigungsstelle (8) und oberhalb des Bodenbearbeitungsteiles (9,24) Markierungen (16,25) aufweist, die die Anschweißstelle (21,27) des neuen Bodenbearbeitungsteiles (18,26) bestimmen.

2. Zinken nach Anspruch 1, dadurch gekennzeichnet, daß die Markierungen (16,25) schräg zur Längsachse des Zinkens (3,22) verlaufen.

3. Zinken nach Anspruch 2, dadurch gekennzeichnet, daß die Markierungen (16) auf ihrer Vorderseite einen Winkel ($\alpha$) von kleiner als 60° zur Senkrechten bei Montage an dem Werkzeugkreisel (2) einschließen.

4. Zinken nach Anspruch 1, dadurch gekennzeichnet, daß die Markierungen als Einprägungen (25) ausgebildet sind.

5. Zinken nach Anspruch 1, dadurch gekennzeichnet, daß die Markierungen als Erhebungen (16) ausgebildet sind.

## Claims

1. A tine for a soil-working machine with several tool wheels, disposed next to one another in a row extending transversely to the direction of travel, and on which the tines are located, the tines each having an attachment part at roughly right angles to the soil-working part, characterised in that, after wearing out of the soil-working part (9, 24), a new soil-working part (18, 26) can be welded to the residual tine (9, 28), that the tine has, below its attachment point (8) and above the soil-working part (9, 24), markings (16, 25) which determine the welding-on point (21, 27) of the new soil-working part (18, 26).

2. A tine according to Claim 1, characterised in that the markings (16, 25) extend obliquely to the longitudinal axis of the tine (3, 22).

3. A tine according to Claim 2, characterised in that the markings (16) enclose on their frontal side an angle ( ) of less than 60° to the vertical when mounted on the tool wheel (2).

4. A tine according to Claim 1, characterised in that the markings are in the form of impressed markings (25).

5. A tine according to Claim 1, characterised in that the markings are in the form of relief markings (16).

## Revendications

1. Dent de machine pour le travail du sol comportant plusieurs toupies porte-outils disposées les unes à côté des autres, en rangées s'étendant transversalement par rapport au sens de marche, toupies munies de dents qui ont chacune une partie de fixation recourbée à l'équerre par rapport à la partie servant au travail du sol, dent caractérisée en ce qu'après usure de la partie (9, 24) servant au travail du sol, une nouvelle pièce (18, 26) de travail du sol peut être soudée sur le résidu de dent (9, 28) et la dent (3, 22) comporte en-dessous de sa zone de fixation (8) et au-dessus de la partie (9, 24) servant au travail du sol, des repères (16, 25) qui définissent la zone de soudage (21, 27) de la nouvelle pièce (18, 26) servant au travail du sol.

2. Dent selon la revendication 1, caractérisée en ce que les repères (16, 25) sont obliques par rapport à l'axe longitudinal de la dent (3, 22).

3. Dent selon la revendication 2, caractérisée en ce que les repères (16) font au niveau de la face face avant, un angle ($\alpha$) inférieur à 60° par rapport à la verticale lorsque la dent est montée sur une toupie (2).

4. Dent selon la revendication 1, caractérisée en ce que les repères sont des empreintes (25).

5. Dent selon la revendication 1, caractérisée en ce que les marques sont des bossages (16).

**Fig.1**

Fig.2

Fig.3

Fig.4  Fig.5  Fig. 6

8

Fig.7

Fig.8

Fig. 9

Fig. 10

Fig. 11